(19) Europäisches Patentamt
European Patent Office
Office européen des brevets

(11) Veröffentlichungsnummer: **0 176 857**
B1

(12) # EUROPÄISCHE PATENTSCHRIFT

(45) Veröffentlichungstag der Patentschrift: 19.07.89

(21) Anmeldenummer: 85111718.4

(22) Anmeldetag: 17.09.85

(51) Int. Cl.[4]: **C 09 B 67/22**, C 09 D 11/02// C09B25/00

ERRATUM

| DIE TEXTSTELLE: TEXT PUBLISHED: LE PASSAGE SUIVANT: | (SEITE, SPALTE, ZEILE) (PAGE, COLUMN, LINE) (PAGE, COLONNE, LIGNE) | | LAUTET BERICHTIGT: SHOULD READ: DEVRAIT ETRE LU: |
|---|---|---|---|
| bei dem erfindungsgemsäßen | 9 | 3 | bei dem erfindungsgemäßen |
| wäßriger Lösung und 6,15 Teile | 9 | 49 | wäßrigen Lösung und 6,15 Teile |
| einer wäßriger Suspension | 11 | 6 | einer wäßrigen Suspension |
| wurde nach beispeil 1 | 11 | 36 | wurde nach Beispiel 1 |
| 630°C getrocknet. | 15 | 61 | 60°C getrocknet. |

Tag der Entscheidung über die Berichtigung / Date of decision on rectification: / Date de décision portant sur modification: 03.10.89

Ausgabe- und Veröffentlichungstag: / Issue and publication date: / Date d'edition et de publication: 29.11.89

Patbl.Nr:) 89/48
EPB no:) .........
Bull. no:)

(19) Europäisches Patentamt
European Patent Office
Office européen des brevets

(11) Veröffentlichungsnummer: **0 176 857**
**B1**

(12) # EUROPÄISCHE PATENTSCHRIFT

(45) Veröffentlichungstag der Patentschrift: **19.07.89**

(51) Int. Cl.[4]: **C 09 B 67/22**, C 09 D 11/02// C09B25/00

(21) Anmeldenummer: **85111718.4**

(22) Anmeldetag: **17.09.85**

(54) **Pigmentzubereitungen.**

(30) Priorität: **19.09.84 DE 3434379**

(43) Veröffentlichungstag der Anmeldung: **09.04.86 Patentblatt 86/15**

(45) Bekanntmachung des Hinweises auf die Patenterteilung: **19.07.89 Patentblatt 89/29**

(84) Benannte Vertragsstaaten: **CH DE FR GB IT LI**

(56) Entgegenhaltungen:
EP–A– 0 034 725
DE–B– 2 012 152
DE–B– 2 012 153
DE–B– 2 122 521

(73) Patentinhaber: **BASF Lacke + Farben Aktiengesellschaft**
**Max-Winkelmann-Strasse 80**
**D-4400 Münster (DE)**

(72) Erfinder: **Ruff, Wolfgang, Dr.**
**Tiefenbachstrasse 93**
**D-7000 Stuttgart 61 (DE)**
Erfinder: **Liedek, Egon, Dr.**
**Holunderweg 16**
**D-7300 Esslingen (DE)**
Erfinder: **Berger, Gerhard, Dr.**
**Banzhaldenstrasse 24**
**D-7000 Stuttgart 30 (DE)**
Erfinder: **Sonneborn, Hans Walter, Dr.**
**Lindenfirststrasse 14/1**
**D-7070 Schwaebisch-Gmuend (DE)**

(74) Vertreter: **Mutzbauer, Helmut, Dr. et al**
**Carl-Bosch-Strasse 38**
**D-6700 Ludwigshafen (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Es ist bekannt, daß Pigmente durch Zumischen von Säuregruppen enthaltenden Farbstoffen in den färbetechnischen Eigenschaften in verschiedenen Bindemitteln verbessert werden können.

So sind aus der DE-AS 20 12 153 Pigmentgemische aus zwei und mehr Farbstoffen bekannt, bei denen ein Teil der Farbstoffe polare Gruppen wie Carbonsäure-, Sulfonsäure- oder auch Carbamoyl- oder Sulfamoylgruppen enthalten. Der Anteil an diesen sauren Farbstoffen kann 0,5 bis 20, vorzugsweise 1 bis 5 Mol.% betragen.

Aus der DE-AS 21 35 468 sind Pigmentzubereitungen aus Kupplungsprodukten aus diazotierten Anilinen und Acetoacetylamiden bekannt, die einen wasserlöslichen Farbstoff auf Basis des Kupplungsproduktes enthalten. Der Anteil des löslichen Farbstoffs kann 0,1 bis 20 Gew.%, bezogen auf die Zubereitung, betragen.

In der DE-AS 20 12 152 wird ein Verfahren zur Herstellung von Disazopigmentgemischen beschrieben, nach dem tetrazotiertes 3,3'-Dichlor-4,4'-diaminodiphenyl mit einer Mischung im Verhältnis 1 : 2 Mol kuppelt, die eine oder zwei verschiedene unpolare und eine oder zwei verschiedene polare Kupplungskomponenten der Acetoacetarylid- oder 1-Arylpyrazolon-5-Reihe enthält. Die polaren Komponenten tragen eine oder zwei Carbonsäure- und/oder Sulfonsäuregruppen. Der Anteil der polaren Kupplungskomponenten liegt bei 0,5 bis 20, vorzugsweise bei 1 bis 5 Mol.%.

Aus der DE-AS 21 22 521 sind modifizierte Diarylidpigmente bekannt, die neben dem Pigment auf der Basis 4,4'-Diaminodiphenyl mit Acetoacetarylid, 1-Phenyl-3-methylpyrazolon-5 oder 2-Hydroxynaphthalin-3-carboxanilid bis zu 25 Gew.% eines wasserlöslichen Farbstoffs auf der gleichen Basis enthalten.

Weiterhin werden in der EP-B 12 944 Monoazopigmentgemische beschrieben, die durch Kupplung von diazotierten Anilinen auf Acetoacetarylamide erhalten werden, wobei mehr als eine Diazo- und/oder Kupplungskomponente verwendet werden und wobei 0,1 bis 20 Mol.% der Diazo- und/oder Kupplungskomponenten saure Gruppen enthalten und im Kupplungsprodukt die reaktionsfähigen sauren Gruppen mit quaternären kationenaktiven Verbindungen umgesetzt werden.

Aufgabe der vorliegenden Erfindung war es weitere für Druckfarben geeignete Pigmente bzw. Pigmentzubereitungen zu entwickeln, die in den koloristischen, rheologischen und drucktechnischen Eigenschaften verbessert sind.

Es wurde gefunden, daß anwendungstechnisch verbesserte Pigmente vorliegen, wenn diese in Form von Zubereitungen vorliegen, die

a) mindestens ein Azopigment α) auf der Basis von Kupplungsprodukten aus diazotierten aromatischen Monoaminen mit Acetoacetaryliden, 1-Phenylpyrazolonen, 3-Hydroxy-2-naphthoesäure, deren Arylide und/oder β-Naphthol, β) auf der Basis von Kupplungsprodukten aus tetrazotiertem 4,4'-Diaminodiphenyl, Dichlor-, Dichlor-dibrom- und/oder Tetrachlor-4,4'-diaminodiphenyl mit Acetoacetaryliden und/oder 1-Phenylpyrazolonen oder γ)-Gemische dieser Pigmente,

b) mindestens einen Farbstoff der allgemeinen Formel

$$F\text{-}(X)_n,$$

in der

F für einen n-wertigen Rest eines Monoazofarbstoffs, Disazofarbstoffs oder eines Chinophthalons, und F gegebenenfalls eine Sulfonsäuregruppe trägt,

n für 1, 2, 3 oder 4, und

X für eine Gruppe der Formel

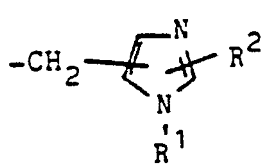

oder

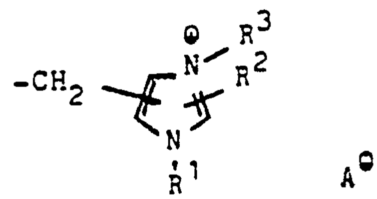

stehen, worin

$R^1$ und $R^2$ unabhängig von einander Wasserstoff oder $C_1$- bis $C_4$-Alkyl,

$R^3$ $C_1$- bis $C_4$-Alkyl oder Hydroxy-$C_2$- bis $C_4$-Alkyl und

$A^{\ominus}$ ein Äquivalent eines Anions bedeuten und wobei bei n > 1 die Reste X gleich oder verschieden sein können

und gegebenenfalls

c) in Pigmentzubereitungen übliche weitere Bestandteile

enthalten.

Die Pigmente der erfindungsgemäßen Zubereitungen zeigen im Vergleich zu den reinen Pigmenten deutlich bessere koloristische, rheologische und drucktechnische Eigenschaften. In flüssigen Druckfarbensystem, z. B. bei Tiefdruckfarben ist ein gutes Fließverhalten im Hinblick auf die drucktechnischen Eigenschaften von großer Bedeutung. Bei den Pigmentzubereitungen des Standes der Technik, muß jedoch ein günstiges rheologisches Verhalten in der Regel durch eine geringere Transparenz der mit diesen Farben erhaltenen Drucke erkauft werden wie umgekehrt eine Erhöhung der Transparenz häufig zu schlechterem Fließverhalten führt. So erhält man z. B. mit der Zubereitung von C.I.-Pigment Gelb 13 ; C.I. Nr. 21 100 mit einem Gehalt von 4 Gew.% des in der EP-A 34 725, Beispiel 72 beschriebenen Farbstoffs eine Nitrocellulose-Tiefdruckfarbe, die eine deutlich verbesserte Viskosität im Vergleich zu einer Farbe aufweist, welche das reine Pigment-Gelb 13 enthält. Die die erfindungsgemäße Zubereitung enthaltende Tiefdruckfarbe gibt außerdem Drucke mit deutlich besserem Glanz und besserer Transparenz.

Der Vorteil der erfindungsgemäßen Zubereitungen liegt in der Kombination aus gutem Fließverhalten der Druckfarbe bei gleichzeitig hoher Transparenz der mit diesen Farben erhaltenen Drucke.

Demgegenüber erhält man z. B. mit einer Zubereitung, die neben C.I.-Pigment Gelb 13 einen sauren durch Kupplung von 3,3'-Diaminodiphenyl-2,2'-disulfonsäure mit Acetoacet-2,4-dimethylanilid erhältlichen Farbstoff enthält eine Tiefdruckfarbe auf der Basis Nitrocellulose, die zwar Drucke mit hoher Transparenz und gutem Glanz liefert jedoch schlechtes Fließverhalten zeigt.

Die in den neuen Zubereitungen enthaltenen Pigmente (a) sind bekannt. Letztere sind Kupplungsprodukte, die erhalten werden : α) aus diazotierten aromatischen Monoaminen, insbesondere substituierten Anilinen mit Acetoacetaryliden, mit Phenylpyrazolonen, die im Pyrazolonrest und/oder im Phenylrest noch weiter substituiert sein können, mit 3-Hydroxy-2-naphthoesäure, deren Arylide, β-Naphthol oder Gemischen davon β) aus tetrazotierten 4,4'-Diaminodiphenylen wie 4,4'-Diaminodiphenyl, 3,3'-Dichlor-4,4'-diaminodiphenyl, Dichlordibrom- und/oder Tetrachlor-4,4'-diaminodiphenyl mit Acetoacetaryliden und/oder 1-Phenylpyrazolonen, die noch weiter substituiert sein können.

Im einzelnen sind z. B. zu nennen :

C.I. Pigment Yellow 13, C.I. Nr. 21 100 ; C.I. Pigment Yellow 12, C.I. Nr. 21 090 ; C.I. Pigment Yellow 14 ; C.I. Nr. 21 095 ; C.I. Yellow 83, C.I. Nr. 21 108 ; C.I. Pigment Yellow 1, C.I. Nr. 11 680 ; C.I. Pigment Yellow 74 ; C.I. Nr. 11 741 ; C.I. Pigment Yellow 73 ; C.I. Nr. 11 730 ; C.I. Pigment Orange 13, C.I. Nr. 21 110 ; C.I. Pigment Orange 34 ; C.I. Nr. 21 115 ; C.I. Pigment Red 3, C.I. Nr. 12 120.

Bevorzugt sind für (a) Disazopigmente auf der Basis von diazotiertem 3,3'-Dichlor-4,4'-diaminodiphenyl mit Acetoacetaryliden, Phenylpyrazolon-5-Verbindungen oder Gemischen dieser Kupplungskomponenten.

Weiterhin kommen für (a) Pigmentgemische in Betracht, die durch Kupplung von 2 verschiedenen Diazokomponenten auf eine oder mehrere Kupplungskomponenten oder durch Kupplung einer Diazokomponente auf zwei oder mehr Kupplungskomponenten erhalten werden.

In diesen Fällen ist die eine Komponente in der Regel zu mindestens 80 bis 98 % im Produkt enthalten.

Als Zusätze (b) kommen Farbstoffe der Formel

$$F\text{-}(X)_n \qquad (I)$$

in Betracht. In der Formel steht F für einen n-wertigen, gegebenenfalls eine Sulfonsäuregruppe tragenden Rest eines Monoazofarbstoffs, eines Disazofarbstoffs oder eines Chinophthalons, n für 1, 2, 3 oder 4, vorzugsweise 1 oder 2, und X für eine Gruppe der Formel

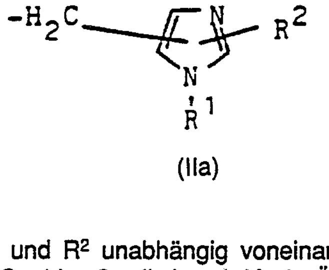

(IIa)

oder

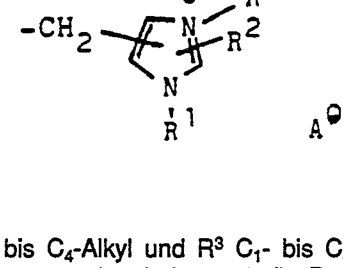

worin $R^1$ und $R^2$ unabhängig voneinander Wasserstoff oder $C_1$- bis $C_4$-Alkyl und $R^3$ $C_1$- bis $C_4$-Alkyl oder Hydroxy-$C_2$- bis -$C_4$-alkyl und $A^{\ominus}$ ein Äquivalent eines Anion bedeuten und wobei n > 1 die Reste X gleich oder verschieden sein können. Bevorzugt sind aus koloristischen Gründen Farbstoffe deren Farbtöne den als (a) verwendeten Pigmenten entsprechen oder nahekommen.

Als Zusätze (b) geeignete Farbstoffe (I) sind aus der EP-A-34 725 bekannt.

Hervorzuheben sind Farbstoffe (I), in denen F ein n-wertiger Rest ist, der sich vom Benzochinophthalon oder von Farbstoffen der Formeln (III) oder (IV),

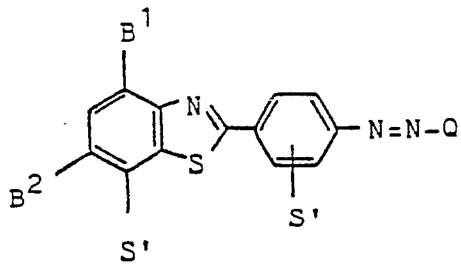

(III)

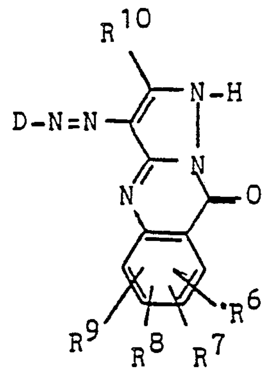

(IV)

ableitet. In der Formel (III) steht Q für einen Rest der Formeln (Va) bis (Vf)

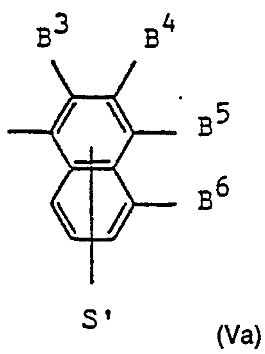

(Va)

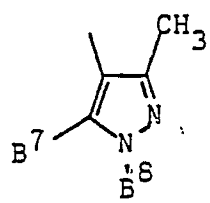

,

(Vb)

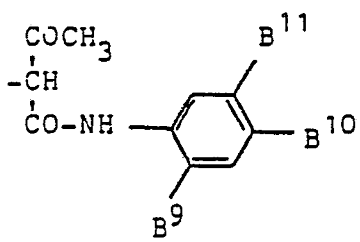

,

(Vc)

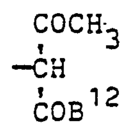

,

(Vd)

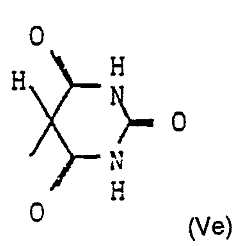

oder

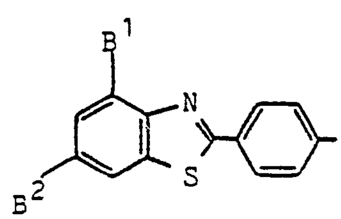

(Ve)

(Vf)

und

$B^1$ für Wasserstoff oder Methyl,

$B^2$ Wasserstoff, Methyl oder Ethyl,

S' für eine Sulfonsäuregruppe oder Wasserstoff,

$B^3$ für Wasserstoff, Hydroxy, Amino, 2-Hydroxyethylamino, Methylamino oder Phenylamino,

$B^4$ für Wasserstoff, Acetyl oder N-Phenylcarbamoyl,

$B^5$ für Wasserstoff, Hydroxy, Methyl, Methoxy, Chlor, Brom, 2-Hydroxyethylamino oder Dimethylami-

no, wobei $B^3$ oder $B^5$ Hydroxy oder gegebenenfalls substituiertes Amino ist,

$B^6$ für Wasserstoff, Methyl oder Methoxy,

$B^7$ für Hydroxy oder Amino,

$B^8$ für Phenyl oder 4-Methoxyphenyl,

$B^9$ für Wasserstoff, Methyl oder Methoxy,

$B^{10}$ für Wasserstoff, Methyl oder Methoxy,

$B^{11}$ für Wasserstoff oder Methoxy und

$B^{12}$ für Methoxy, Butoxy, Amino, Methylamino, Phenoxy, 4-Methylphenoxy oder 3-Methyl-4-methoxyphenoxy.

In der Formel IV bedeutet D einen gegebenenfalls durch ein Phenylazo oder Tolylazo und gegebenenfalls durch ein oder zwei Chlor, Nitro, Methoxy und/oder Methyl substituiertes Phenyl oder einen Rest der Formel (Vf), worin $B^1$ und $B^2$ die oben angegebene Bedeutung haben,

$R^6$ Wasserstoff, Chlor, Brom, Nitro, Methyl, Trifluormethyl, Carboalkoxy, gegebenenfalls substituiertes Carbamoyl oder Sulfamoyl, Sulfonsäurearylester, Cyan, Alkanoylamino oder Phenyl,

$R^7$ Wasserstoff, Chlor oder Brom,

$R^8$ und $R^9$ unabhängig voneinander Wasserstoff, Chlor, Brom oder zusammen einen annellierten Ring und

$R^{10}$ Methyl oder gegebenenfalls durch Chlor oder Methoxy substituiertes Phenyl.

Weiterhin sind als Farbstoffe (I) solche zu nennen, die sich von Disazofarbstoffen auf der Basis von Kupplungsprodukten von 4,4'-Diaminodiphenylen mit Acetoacetaniliden, Phenylpyrazolonen, Naphtholen oder 3-Hydroxy-2-naphthoesäurearyliden ableiten. Von diesen Farbstoffen sind solche bevorzugt, die 3,3'-Dichlor-, Dichlor-dibrom- und/oder Tetrachlor-4,4'-diaminodiphenyl als Disazokomponente und Acetoacetanilide und/oder Phenylpyrazolone als Kupplungskomponente enthalten.

Besonders hervorzuheben sind Farbstoffe (I), in denen F ein ein- oder zweiwertiger Rest ist, der sich vom 5,6-Benzochinophthalon oder von Farbstoffen der Formeln (IIIa) oder (IVa) ableitet:

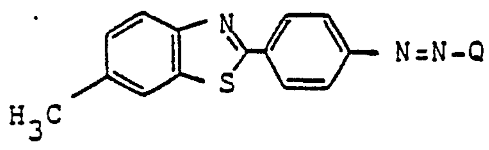

(IIIa)

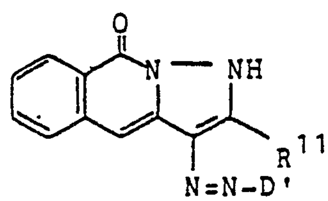

(IVa)

in denen Q' für einen Rest der Barbitursäure, des N-Methyl-N-benzylanilins oder des 4-(6'-Methylbenzthiazolyl-2')-phenyls, $R^{11}$ für Methyl oder Phenyl und D' für den Rest eines durch Phenylazo oder Tolylazo substituierten Phenylrests, der gegebenenfalls durch Chlor, Methoxy oder Methyl noch weiter substituiert ist, oder 4-(6'-Methylbenzthiazolyl-2')phenyls stehen.

Ganz besonders bevorzugt sind Chinophthalonverbindungen der Formel

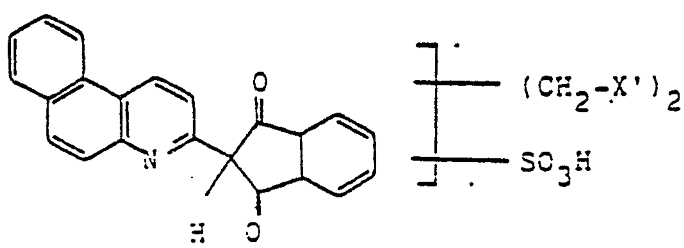

(VI)

in der X' für

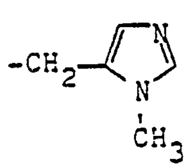

und/oder

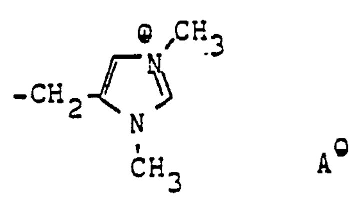

steht.

Der Anteil (b) in den neuen Zubereitungen beträgt in der Regel 0,2 bis 10 Gew.% und richtet sich nach dem Pigment (a) und dessen Anwendung. Die für optimale Eigenschaften des Pigments erforderlichen Mengen von (b) können durch einfache Reihenversuche leicht ermittelt werden. Im allgemeinen wird man mit Zusätzen von 1 bis 5, insbesondere von 1,5 bis 4 Gew.% (b), bezogen auf (a) auskommen, um dem Pigment optimale Eigenschaften für Druckfarben, insbesondere für Tiefdruckfarben zu verleihen.

Die neuen Zubereitungen gemäß der Erfindung können in unterschiedlicher Weise hergestellt werden.

So kann die Kupplung zum Pigment (a) in Gegenwart des Farbstoffs (b) erfolgen. Der Farbstoff (b) kann der Kupplungskomponente oder der Diazokomponente vor der Kupplung zugegeben werden. Man kann (b) in Form einer Suspension oder Lösung auch getrennt während der Kupplungsreaktion zugeben.

Vorzugsweise verfährt man so, daß man (b) der wäßrigen Pigmentsuspension nach Beendigung der Kupplungsreaktion oder dem neutral gewaschenen und in Wasser suspendierten Preßkuchen von (a) zugibt.

In einigen Fällen ist es auch möglich, (b) während der Dispergierung von (a) in einer Bindemittellösung zuzusetzen. Ferner ist es in einigen Fällen auch möglich, (a) und (b) trocken zu mischen und gemeinsam zu mahlen.

Eine weitere Verbesserung der in den neuen Zubereitungen enthaltenen Pigmente, kann in manchen Fällen erzielt werden, wenn dem Gemisch aus (a) und (b) zusätzlich noch Harze, z. B. Kolophonium oder Kolophoniumderivate (modifiziertes Kolophonium) wie hydriertes, dehydriertes, disproportioniertes oder polymerisiertes Kolophonium, Tallharze und/oder andere als Dispergierhilfsmittel bekannte Mittel zugesetzt werden, z. B. Fettalkohole, Polyole, Ester von langkettigen Mono- oder Polycarbonsäuren, wie Diethyl-, Dipropyl-, Diisopropyl-, Dibutyl-, Dihexyl- und Dioctylsebacat.

Vorteilhafterweise wird (b) in Form einer wäßrigen Suspension oder Lösung der wäßrigen neutralisierten Pigmentsuspension zugesetzt, wobei durch anschließendes Erwärmen die Pigmenteigenschaften vorteilhaft verändert werden. Die Zubereitung wird dann, gegebenenfalls nach dem Abkühlen in üblicher Weise isoliert.

Im Falle des Zusatzes von Harzen verfährt man vorteilhafter Weise so, daß man zunächst den Farbstoff (b) in Form einer Lösung oder Suspension zur neutralen bis schwach alkalischen Pigmentsuspension gibt und dann eine wäßrig-alkalische Lösung des Harzes und gegebenenfalls eine wäßrige Dispersion eines Dispergierhilfsmittels zusetzt. Das Gemisch wird auf Temperaturen von 50 °C bis zur Siedetemperatur erwärmt und das Harz entweder in Form der Säure oder durch Zugeben von Metallsalzen, die unlösliche Harzseifen ergeben, gefällt.

Die Zubereitung wird dann in üblicher Weise isoliert.

Die folgenden Beispiele sollen die neuen Zubereitungen sowie deren Herstellung zusätzlich erläutern. Die im folgenden genannten Teile und Prozentangaben beziehen sich auf das Gewicht. Die Volumenteile verhalten sich zu den Gewichtsteilen wie das Liter zum Kilogramm.

## Beispiel 1

A) Zubereitung

A1) Tetrazotierung

14 Teile 3,3'-Dichlor-4,4'-diaminodiphenyl wurden in 830 Teilen 0,4 n Salzsäure bei 0 °C mit 7,7 Teilen Natriumnitrit tetrazotiert. Überschüssiges Natriumnitrit wurde mit Amidosulfonsäure entfernt.

A2) Kupplung

23,2 Teile Acetoacet-2,4-dimethylanilid wurden in 159 Teilen 1,5 n Natronlauge gelöst. Im Kupplungsgefäß wurden 151 Teile 0,5 n Essigsäure vorgelegt. Dann wurde so viel der alkalisch gelösten Kupplungskomponente zur Essigsäure gegeben, daß ein pH-Wert von 4,5 erreicht wurde. Anschließend wurden gleichzeitig die Tetrazolösung A1) und die restliche Lösung der Kupplungskomponente in das Reaktionsgefäß zugegeben, wobei der pH-Wert (gegebenenfalls durch Zugeben von verdünnter Natronlauge) bei 4,5 und die Temperatur bei 20 °C gehalten wurde.

Nach beendeter Kupplung wurden der Pigmentsuspension 2 Teile des in der EP-A-34 725, Beispiel 71 beschriebenen Farbstoffs in Form einer wäßrigen Suspension (wurde durch Umsetzen von 4-Methylimidazol, Paraformaldehyd und 2-[1,3-Dioxohydrinyl-(2)]-5,6-benzochinolin hergestellt) zugefügt. Anschließend wurde 30 Min. gekocht, die Fällung abfiltriert, mit Wasser ausgewaschen und das Filtergut bei 50 bis 60 °C getrocknet.

B) Vergleich

Tetrazotierung, Kupplung und Nachbehandlung des Vergleiches erfolgte wie unter A1) und A2), jedoch wurde kein Farbstoff zugegeben.

C) Prüfung der erfindungsgemäßen Zubereitung A) und des Vergleichs

C1) Dispergierung

Ein handelsüblicher Nitrocellulose-Lack auf Basis Ethylacetat/Ethanol wird 8 %ig pigmentiert. Hierzu werden 56 g Pigment in 644 g Bindemittellösung nach dem Zugeben von 1 050 g Glasperlen (Ø 3 mm) auf einem « Dispermat AS2 » dispergiert. Die Dispergierung erfolgt in einem 2 1-Gefäß mit Kühlmantel bei 20 °C und 60 °C. Die Rührdauer beträgt 30 Min.

C2) Prüfung des Fließverhaltens

Bei verschiedenen Verdünnungen werden die Auslaufzeiten der Farben aus dem DIN-Becher gemessen. Diese Prüfung wird nach einer dreiwöchigen Lagerung der Farben wiederholt. Die Messungen werden graphisch ausgewertet, indem Fließkurven aufgestellt werden, die sich durch Auftragen der Auslaufzeiten gegen die Verdünnung ergeben.

C3) Prüfung der koloristischen Eigenschaften

Ein Teil der nach C1) erhaltenen Farben werden durch Zugabe von 0,3 Teilen eines Gemisches aus Ethanol/Ethylacetat (1 : 1) verdünnt und mit einem « hand-coater » oder « hand-proofer » auf Papier sowie auf PE-Folie oder Metallfolie abgezogen.

C4) Beurteilung

Die Fließkurve der mit der Zubereitung aus A2) pigmentierten Farbe C1) zeigte gegenüber dem Vergleichspigment B) einen wesentlich günstigeren Verlauf. Auch nach dreiwöchiger Lagerung der Farbe C1) blieb das günstige Fließverhalten der mit A2) pigmentierten Farbe erhalten.

Die mit den erfindungsgemäßen Zubereitungen hergestellten Aufstriche zeigten eine wesentlich höhere Transparenz und besseren Glanz als die mit dem Vergleich B erhaltenen Färbungen.

Beispiel 2

Die Tetrazotierung von 14 Teilen 3,3'-Dichlor-4,4'-diaminodiphenyl und Kupplung mit 23,2 Teilen Acetoacet-2,4-dimethylanilid wurde wie in Beispiel 1 durchgeführt. Nach beendeter Kupplung wurden zu der Pigmentsuspension 2 Teile des in der EP-A-34 725, Beispiel 72 beschriebenen Farbstoffs (wurde durch Umsetzung von 1-Methylimidazol, Paraformaldehyd und 2-[1,3-Dioxohydrinyl-(2)]-5,6-benzochinolin hergestellt) in Form einer wäßrigen Suspension gegeben. Anschließend wurde 30 Min. lang gekocht, die Zubereitung abfiltriert, mit Wasser gewaschen und bei 50 bis 60 °C getrocknet.

Die Zubereitung wurde wie in Beispiel 1 C1) in einem Nitrocellulose-Tiefdrucklack dispergiert. Im Vergleich zu einem ohne Farbstoff-Zusatz hergestellten Pigment zeigten die Färbungen hinsichtlich Glanz, Transparenz und rheologischem Verhalten ähnliche Vorteile wie bei der nach Beispiel 1A) erhaltenen Pigmentzubereitung.

Beispiel 3

Die Tetrazotierung von 14 Teilen 3,3'-Dichlor-4,4'-diaminodiphenyl und Kupplung mit 23,2 Teilen Acetoacet-2,4-dimethylanilid wurde wie in Beispiel 1A) angegeben durchgeführt. Nach beendeter Kupplung wurden zur Pigmentsuspension 2 Teile einer wäßrigen Lösung eines Farbstoffs der Formel

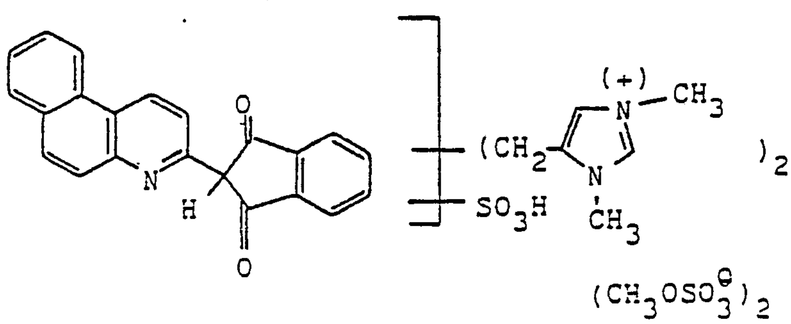

(erhalten durch Quaternierung des in Beispiel 2 verwendeten Farbstoffs mit Dimethylsulfat) gegeben.

Anschließend wurde 30 Min. zum Sieden erhitzt, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Im Vergleich zu einer Farbe mit einem ohne Farbstoffzusatz hergestellten Pigment waren die mit der Zubereitung erhaltenen Färbungen im Glanz und in der Transparenz überlegen. Im rheologischen Verhalten zeigte die mit der Zubereitung erhaltene Druckfarbe überlegenes Verhalten.

Beispiel 4

Die Tetrazotierung von 14 Teilen 3,3'-Dichlor-4,4'-diaminodiphenyl und Kupplung mit 23,2 Teilen Acetoacet-2,4-dimethylanilid wurde wie in Beispiel 1A) angegeben durchgeführt. Nach beendeter Kupplung wurde die Pigmentsuspension mit 10 %iger Natronlauge neutralisiert. Anschließend wurden 2 Teile des in Beispiel 1 zugesetzten Farbstoffs in Form einer wäßrigen Suspension und danach nacheinander 7 Teile eines partiell hydrierten Kolophoniumharzes (Bandelsbezeichnung : Staybelite Resin) in 85 Teilen 0,3 n Natronlauge und 1,88 Teile Sebacinsäuredibutylester, dispergiert in 10 Teilen Wasser, zugegeben. Die Pigmentsuspension wurde 15 Min. zum Sieden erhitzt, anschließend das Harz durch Zugabe von 10 %iger Salzsäure bei pH 5 ausgefällt und weitere 15 Min. zum Sieden erhitzt. Die Zubereitung wurde abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoffzusatz hergestellten Pigment ergab hinsichtlich Glanz, Transparenz und rheologischem Verhalten ähnliche Vorteile wie sie bei der nach Beispiel 1A) erhaltenen Zubereitung gefunden wurden.

Beispiel 5

Die Synthese und Nachbehandlung wurde wie in Beispiel 4 beschrieben durchgeführt, jedoch wurden anstelle des in Beispiel 1 A2) genannten Farbstoffs 2 Teile des in Beispiel 2 angegebenen Farbstoffs in Form der wäßrigen Suspension zugesetzt.

Die Zubereitung wurde nach Beispiel 1 C1) in einem Nitrocellulose-Tiefdrucklack dispergiert. Die Beurteilung gegenüber einem ohne Farbstoffzusatz hergestellten Pigment ergab hinsichtlich Glanz, Transparenz und rheologischem Verhalten ähnliche Vorteile wie sie bei der nach Beispiel 1A) erhaltenen erfindungsgemäßen Zubereitung gefunden wurden.

Beispiel 6

Die Synthese und Nachbehandlung wurde wie in Beispiel 4 durchgeführt, jedoch wurden 1,7 Teile des in Beispiel 3 verwendeten Farbstoffs in Form der wäßrigen Lösung angewendet.

Die erhaltene Zubereitung wurde nach Beispiel 1 C1) in einem Nitrocellulose-Tiefdrucklack dispergiert. Die erhaltene Farbe zeigt im Vergleich zu einer mit dem Vergleichspigment, das ohne Farbstoff (b) hergestellt wurde, im Glanz, in der Transparenz und im rheologischen Verhalten ähnliche Vorteile wie die Zubereitung des Beispiels 1 A1).

Beispiel 7

A) Pigmentzubereitung

Die Tetrazotierung von 14 Teilen 3,3'-Dichlor-4,4'-diaminodiphenyl und Kupplung mit 23,2 Teilen Acetoacet-2,4-dimethylanilid wurden wie in Beispiel 1A) durchgeführt. Nach beendeter Kupplung wurde die Pigmentsuspension mit 10 %iger Natronlauge neutralisiert. Anschließend wurden 2 Teile des in Beispiel 3 verwendeten Farbstoffs in Form einer wäßrigen Suspension und danach 6, 7 Teile eines partiell hydrierten Kolophoniumharzes (Handelsbezeichnung Staybelite Resin) in 81 Teilen 0,3 n Natronlauge zugegeben. Die Pigmentsuspension wurde 15 Min. zum Sieden erhitzt, anschließend das Harz durch Zugabe von 10 %iger Salzsäure bei pH 5 ausgefällt und weitere 15 Minuten zum Sieden erhitzt. Die Zubereitung wurde abfiltriert, mit Wasser gewaschen und bei 50 bis 60 °C getrocknet.

B) Vergleichspigment

Kupplung und Nachbehandlung des Vergleichspigments erfolgt entsprechend dem erfindungsgemäßen Pigment mit dem Unterschied, daß nach der Kupplung kein Farbstoff zugesetzt wird.

C) Prüfung der Pigmentzubereitung A) und des Vergleichspigments B)

Die Zubereitung A) und das Vergleichspigment B) wurden auf dem Dreiwalzenstuhl bei 40 °C in einem Buchdruck/Offsetdruck-Firnis dispergiert. Pigmentgehalt : jeweils 15 %. Drucke mit einem Probedruckgerät nach Dürner ergaben bei der mit der erfindungsgemäßen Zubereitung hergestellten Farbe

eine deutlich höhere Lasur und besseren Glanz im Vergleich zu Drucken, die mit der B) enthaltenden Farbe hergestellt wurden. Die Prüfung der rheologischen Eigenschaften mit einem Laray-Viskosimeter zeigten bei dem erfindungsgemsäßen Pigment trotz der Zunahme in der Lasur keine Verschlechterung der rheologischen Eigenschaften. Nach einer Hitzebelastung von 2 Stunden bei 100 °C zeigte die mit dem Vergleichspigment B) pigmentierte Farbe eine deutliche, die mit der erfindungsgemäßen Zubereitung pigmentierte Farbe nur eine geringfügige Abnahme in der Lasur.

Beispiel 8

Die Tetrazotierung von 14 Teilen 3,3'-Dichlor-4,4'-diaminodiphenyl und Kupplung mit 23,2 Teilen Acetoacet-2,4-dimethylanilid wurde wie in Beispiel 1A) durchgeführt. Nach beendeter Kupplung wurden zur Pigmentsuspension 2 Teile des Farbstoffs der Formel

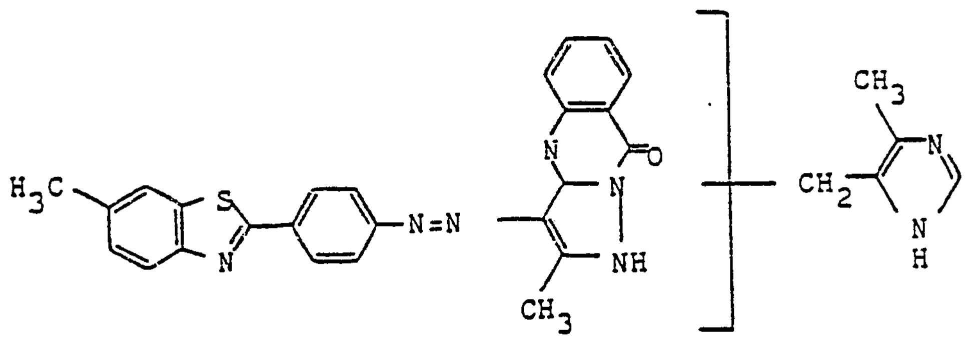

in Form einer wäßrigen Lösung gegeben. Anschließend wurde 30 Min. zum Sieden erhitzt, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoffzusatz hergestellten Pigment ergab hinsichtlich Glanz, Transparenz und rheologischem Verhalten ähnliche Vorteile wie sie bei der nach Beispiel 1A) erhaltenen Zubereitung gefunden wurden.

Beispiel 9

1. Tetrazotierung

14 Teile 3,3'-Dichlor-4,4'-diaminodiphenyl wurden wie in Beispiel 1 beschrieben tetrazotiert.

2. Kupplung

20,2 Teile Acetoacetanilid wurden in 160 Teilen 1,5 n Natronlauge gelöst. Im Kupplungsgefäß wurden 150 Teile 0,5 n Essigsäure vorgelegt. Die Kupplung wurde dann wie in Beispiel 1 A2) beschrieben durchgeführt.

Nach beendeter Kupplung wurde die Pigmentsuspension mit 10 %iger Natronlauge neutralisiert. Anschließend wurden nacheinander 1,83 Teile des in Beispiel 3 zugesetzten Farbstoffs in Form einer wäßriger Lösung und 6,15 Teile eines partiell hydrierten Kolophoniums (Staybelite Resin) in 71 Teilen 0,3 n Natronlauge zugegeben.

Die Pigmentsuspension wurde 15 Min. zum Sieden erhitzt, anschließend das Harz durch Zugabe von 10 %iger Salzsäure bei pH 5 ausgefällt und danach noch 15 Min. zum Sieden erhitzt. Die Zubereitung wurde abfiltriert, mit Wasser gewaschen und bei 50 bis 60 °C getrocknet.

Die Zubereitung wurde nach Beispiel 7C) in einem Buchdruck/Offsetdruck-Firnis dispergiert. Die Beurteilung gegenüber einem ohne Farbstoffzusatz hergestellten Pigment (Vergleich) ergab hinsichtlich Glanz und Transparenz ähnliche Vorteile, wie sie bei der in Beispiel 7A) beschriebenen erfindungsgemäßen Zubereitung gefunden wurden. Die aus der vorstehend erhaltenen Zubereitung hergestellte Farbe zeigte gegenüber der Farbe mit dem Vergleichspigment ähnliche Vorteile in der Temperaturstabilität wie die nach Beispiel 7A) erhaltene Zubereitung.

Beispiel 10

1. Tetrazotierung

14 Teile 3,3'-Dichlor-4,4'-diaminodiphenyl wurden wie in Beispiel 1 A1) beschrieben tetrazotiert.

2. Kupplung

21,62 Teile Acetoacet-2-methylanilid wurden in 160 Teilen 1,5 n Natronlauge gelöst. Im Kupplungsgefäß wurden 150 Teile 0,5 n Essigsäure vorgelegt. Die Kupplung wurde wie in Beispiel 1 A2) beschrieben durchgeführt. Nach beendeter Kupplung wurden der Pigmentsuspension 1,91 Gewichtsteile des in Beispiel 2 zugesetzten Farbstoffs in Form einer wäßrigen Suspension zugegeben. Anschließend wurde 30 Min. gekocht, die Zubereitung abfiltriert, mit Wasser gewaschen und bei 50 bis 60 °C getrocknet.

Die Zubereitung wurde nach Beispiel 1 C1) in einem Nitrocellulose-tiefdrucklack dispergiert. Die Beurteilung gegenüber einem ohne Farbstoffzusatz hergestellten Pigment ergab hinsichtlich Glanz, Transparenz und rheologischem Verhalten ähnliche Vorteile, wie sie bei der nach Beispiel 1A) erhaltenen Zubereitung gefunden wurden.

Beispiel 11

Die Synthese und Nachbehandlung des Pigments 3,3'-Dichlor-4,4'-diaminodiphenyl → Acetoacet-2-methylanilid wurde wie in Beispiel 10 durchgeführt, jedoch wurden anstelle des dort genannten Farbstoffs 1,91 Gewichtsteile des in Beispiel 1 angegebenen Farbstoffs in Form der wäßrigen Suspension angewendet.

Die Zubereitung wurde nach Beispiel 1 C1) in einem Nitrocellulose-Tiefdrucklack dispergiert. Die Beurteilung gegenüber einem ohne Farbstoffzusatz hergestellten Pigment ergab hinsichtlich Glanz, Transparenz und rheologischem Verhalten ähnliche Vorteile wie sie bei der in Beispiel 1A) beschriebenen Zubereitung gefunden wurden.

Beispiel 12

Synthese und Nachbehandlung des Pigments wurden wie in Beispiel 10 durchgeführt, jedoch wurde anstelle des dort genannten Farbstoffs 1,91 Gewichtsteile des Farbstoffs der Formel

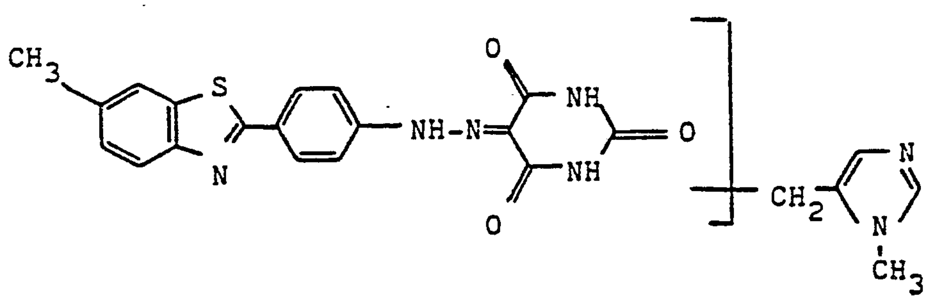

in Form einer wäßriger Lösung zugesetzt. (Der Farbstoff wurde analog EP-A-34 725, Beispiel 64 hergestellt.)

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment (Vergleich) ergab hinsichtlich Glanz und Transparenz ähnliche Vorteile, wie sie bei der nach Beispiel 1 erhaltenen Zubereitung gefunden wurden. Die rheologischen Eigenschaften entsprachen dem Vergleichspigment.

Beispiel 13

1. Tetrazotierung

14 Teile 3,3'-Dichlor-4,4'-diaminodiphenyl wurden wie in Beispiel 1 A1) tetrazotiert.

2. Kupplung

32,2 Teile Acetoacet-2,5-dimethoxy-4-chloranilid wurden in 160 Teilen 1,5 n Natronlauge gelöst. Im Kupplungsgefäß wurden 150 Teile 0,5 n Essigsäure vorgelegt. Die Kupplung wurde entsprechend den Angaben in Beispiel 1 A2) durchgeführt. Nach beendeter Kupplung wurden zu der Pigmentsuspension 2,4 Teile des in Beispiel 1 A2) angegebenen Farbstoffs in Form einer wäßriger Suspension zugefügt. Anschließend wurde 30 Min. lang gekocht, die Zubereitung dann abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Der Vergleich mit einem ohne Farbstoff-Zusatz hergestellten Pigment ergab hinsichtlich rheologischem Verhalten ähnliche Vorteile, wie sie bei der nach Beispiel 1A erhaltenen erfindungsgemäßen Zubereitung gefunden wurden. Gleichzeitig wurden auch noch Vorteile im Glanz und in der transparenz an den mit der Farbe erhaltenen Drucken gefunden.

Beispiel 14

Die Tetrazotierung von 14 Teilen 3,3'-Dichlor-4,4'-diaminodiphenyl und die Kupplung mit 32,2 Teilen Acetoacet-2,5-dimethoxy-4-chloranilid wurden wie in Beispiel 13 durchgeführt. Nach beendeter Kupplung wurden der Pigmentsuspension 2,4 Teile des in der EP-A-34 725, Beispiel 72 beschriebenen Farbstoffs in Form einer wäßriger Suspension zugegeben.

Anschließend wurde 30 Min. lang gekocht, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich rheologischem Verhalten ähnliche Vorteile, wie sie bei der nach Beispiel 1A) erhaltenen erfindungsgemäßen Zubereitung gefunden wurden. Gleichzeitig wurden auch Vorteile im Glanz und in der Transparenz gefunden.

Beispiel 15

Die Tetrazotierung von 14 Teilen 3,3'-Dichlor-4,4'-diaminodiphenyl und die Kupplung mit 32,2 Teilen Acetoacet-2,5-dimethoxy-4-chloranilid wurden wie in Beispiel 13 durchgeführt. Nach beendeter Kupplung wurden zur Pigmentsuspension 2,4 Teile des in Beispiel 3 angegebenen Farbstoffs in Form der wäßrigen Lösung gegeben. Anschließend wurde 30 Min. lang gekocht, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich rheologischem Verhalten ähnliche Vorteile, wie sie bei der nach Beispiel 1A) erhaltenen erfindungsgemäßen Zubereitung gefunden wurden. Gleichzeitig wurden Vorteile im Glanz und in der Transparenz gefunden.

Beispiel 16

Die Tetrazotierung von 14 Teilen 3,3'-Dichlor-4,4'-diaminodiphenyl und die Kupplung mit 32,2 Teilen Acetoacet-2,5-dimethoxy-4-chloranilid wurden wie in Beispiel 13 durchgeführt. Nach beendeter Kupplung wurden zur Pigmentsuspension 2,4 Gewichtsteile des in Beispiel 1 A2) angegebenen Farbstoffs in Form einer wäßrigen Suspension, 8,4 Teile eines teilweise hydrierten Kolophoniums (Staybelite Resin) in 100 Teilen 0,3 n Natronlauge und eine Dispersion von 2,24 Teilen Sebacinsäuredibutylester in 10 Volumenteilen Wasser gegeben. Anschließend wurde 30 Min. gekocht, die Zubereitung abfiltriert, mit Wasser gewaschen und bei 50 bis 60 °C getrocknet.

Die Zubereitung wurde nach beispiel 1 C1) in einem Nitrocellulose-Tiefdrucklack dispergiert. Die Beurteilung gegenüber einem ohne Farbstoff-Zusatz hergestellten Pigment ergab hinsichtlich rheologischem Verhalten ähnliche Vorteile, wie sie bei der nach Beispiel 1) erhaltenen erfindungsgemäßen Zubereitung gefunden wurden. Gleichzeitig wurden Vorteile im Glanz und in der Transparenz gefunden.

Eine Zubereitung mit praktisch den gleichen Eigenschaften erhält man, wenn der Sebacinsäurebutylester durch den Ethyl- oder den Octylester ersetzt wird.

Beispiel 17

1. Tetrazotierung

14 Teile 3,3'-Dichlor-4,4'-diaminodiphenyl wurden wie in Beispiel 1 A1) tetrazotiert.

2. Kupplung

22 Teile Acetoacet-2,4-dimethylanilid und 1,2 Teile Acetoacet-2-methoxyanilid wurden in 160 Teilen 1,5 n Natronlauge gelöst. Im Kupplungsgefäß wurden 150 Teile 0,5 n Essigsäure vorgelegt. Die Kupplung wurde unter den in Beispiel 1 A2) angegebenen Bedingungen durchgeführt. Nach beendeter Kupplung wurden der Pigmentsuspension 2 Teile des in Beispiel 3 genannten Farbstoffs in Form einer wäßrigen Lösung zugefügt. Anschließend wurde 30 Min. gekocht, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A erhaltenen erfindungsgemäßen Zubereitung gefunden wurden.

Beispiel 18

Die Synthese des Pigments 3,3'-Dichlor-4,4'-diaminodiphenyl → Acetoacet-2,4-dimethylanilid/Acetoacet-2-methoxyanilid wurde wie in Beispiel 17 durchgeführt.

Nach beendeter Kupplung wurde die Pigmentsuspension mit 10 %iger Natronlauge neutralisiert. Dann wurden 2 Teile des in Beispiel 2 angegebenen Farbstoffs in Form einer wäßrigen Lösung und anschließend 7 Teile eines teilweise hydrierten Kolophoniumharzes (Staybelite Resin) in 86 Teilen 0,3 n Natronlauge und eine Dispersion von 1,88 Teilen Sebacinsäuredibutylester in 10 Volumenteilen Wasser zugegeben. Die Pigmentsuspension wurde 15 Min. gekocht, anschließend das Harz durch Zugabe von 10 %iger Salzsäure bei pH 5 ausgefällt und weitere 15 Min. zum Sieden erhitzt. Die Zubereitung wurde abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A erhaltenen Zubereitung gefunden wurden.

## Beispiel 19

Die Tetrazotierung von 14 Teilen 3,3'-Dichlor-4,4'-diaminodiphenyl und die Kupplung mit 23,2 Teilen Acetoacet-2,4-dimethylanilid wurde wie in Beispiel 1A) durchgeführt. Nach beendeter Kupplung wurde die Pigmentsuspension durch Zugabe von 10 %iger Natronlauge neutralisiert.

Anschließend wurden 2 Teile des in Beispiel 3 angegebenen Farbstoffs in Form einer wäßrigen Lösung und danach nacheinander 2,08 Teile partiell hydriertes Kolophonium (Staybelite Resin), gelöst in 25 Teilen 0,3 n Natronlauge und eine Dispersion von 1,68 Teilen Sebacinsäuredibutylester in 10 Teilen Wasser zugefügt. Die Suspension wurde 15 Min. gekocht, anschließend das Harz durch Zusatz von 0,46 Teilen Calciumchlorid gefällt und weitere 15 Min. zum Sieden erhitzt. Nach dem Abkühlen auf 80 °C wurde der pH-Wert der Suspension auf 8 gestellt, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile, wie sie bei der nach Beispiel 1A) erhaltenen Zubereitung gefunden wurden.

## Beispiel 20

1. Tetrazotierung

13,72 Teile 3,3'-Dichlor-4,4'-diaminodiphenyl und 0,28 Teile 3,3'-Dimethoxy-4,4'-diaminodiphenyl wurden in 835 Teilen 0,4 n Salzsäure bei 0 °C mit 7,7 Teilen Natriumnitrit tetrazotiert. Überschüssiges Natriumnitrit wurde mit Amidosulfonsäure entfernt.

2. Kupplung

20,2 Teile Acetoacetanilid wurden in 160 Volumenteilen 1,5 n Natronlauge gelöst. Im Kupplungsgefäß wurden 150 Teile 0,5 n Essigsäure vorgelegt. Die Kupplung wurde wie in Beispiel 1 A2) durchgeführt und die erhaltene Pigmentsuspension mit 10 %iger Natronlauge neutralisiert. Anschließend wurden nacheinander 1,83 Teile des in Beispiel 3 angegebenen Farbstoffs in Form einer wäßrigen Lösung und 15,7 Teile eines teilweise hydrierten Kolophoniumharzes (Staybelite Resin) in 180 Teilen 0,3 n Natronlauge zugegeben. Die Suspension wurde 15 Min. gekocht, anschließend das Harz durch Zugabe von 10 %iger Salzsäure bei pH 5 ausgefällt und danach weitere 15 Min. zum Sieden erhitzt. Die Zubereitung wurde abfiltriert, mit Wasser gewaschen und bei 50 bis 60 °C getrocknet.

Die Dispergierung der Zubereitung in einem Buchdruck/Offsetdruck-Firnis ergab gegenüber einem entsprechend ohne Farbstoff-Zusatz hergestellten Pigment sonst gleicher Zusammensetzung eine Farbe von deutlich höherer Transparenz und Farbstärke.

## Beispiel 21

1. Tetrazotierung

14 Teile 3,3'-Dichlor-4,4'-diaminodiphenyl wurden in 835 Teilen 0,4 n Salzsäure bei 0 °C mit 7,7 Teilen Natriumnitrit tetrazotiert. Überschüssiges Natriumnitrit wurde mit Amidosulfonsäure entfernt.

2. Kupplung

19,9 Teile 1-Phenyl-3-methylpyrazolon-(5) wurden in 130 Teilen 2 n Natronlauge gelöst. Im Kupplungsgefäß wurden 143 Teile 2 n Essigsäure vorgelegt. Die Kupplungskomponente wurde durch Zutropfen der alkalischen Lösung zur Essigsäure ausgefällt. Anschließend wurde die Tetrazolösung 1 zugegeben, wobei die Temperatur bei 20 °C gehalten wurde. Nach beendeter Kupplung wurden zu der Suspension 1,8 Teile des in Beispiel 8 genannten Farbstoffs in Form einer wäßriger Lösung zugefügt. Anschließend

wurde 30 Min. lang gekocht, die Zubereitung dann abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz ähnliche Vorteile wie sie bei der nach Beispiel 1A) erhaltenen Zubereitung gefunden wurden.

Beispiele 22 bis 28

14 Teile tetrazotiertes 3,3'-Dichlor-4,4'-diaminodiphenyl wurden auf 21,6 Teile 1-p-Tolyl-3-methylpyrazolon-(5) analog Beispiel 21 gekuppelt. Die erhaltene Pigmentsuspension wurde jeweils wie folgt nachbehandelt.

Beispiel 22

Es wurden 1,9 Teile des Farbstoffs der EP-A-34 725, Beispiel 71 in Form einer wäßrigen Suspension zugegeben und wie in Beispiel 1 A2) erhitzt und aufgearbeitet.

Beispiel 23

Es wurden 1,9 Teile des in Beispiel 3 angegebenen Farbstoffs in Form einer wäßrigen Lösung zugegeben und dann wie bei Beispiel 3 verfahren.

Beispiel 24

Es wurden 1,9 Teile des in Beispiel 3 angegebenen Farbstoffs in Form einer wäßrigen Lösung und anschließend 6,35 Teile partiell hydriertes Kolophonium, gelöst in 78 Teilen 0,3 n Natronlauge, zugegeben. Die Wärmebehandlung und Aufarbeitung erfolgte entsprechend Beispiel 16.

Beispiel 25

Es wurden 1,9 Teile des in Beispiel 3 angegebenen Farbstoffs in Form einer wäßrigen Lösung, 6,68 Teile partiell hydriertes Kolophonium in 81 Teilen 0,3 n Natronlauge sowie eine Dispersion von 1,78 Teilen Sebacinsäuredibutylester in 10 Volumenteilen Wasser zugegeben. Die Wärmebehandlung und Aufarbeitung erfolgte wie in Beispiel 16.

Beispiel 26

Es wurden 1,9 Teile des in Beispiel 2 angegebenen Farbstoffs in Form einer wäßrigen Suspension, 6,68 Teile partiell hydriertes Kolophonium (Staybelite Resin), gelöst in 82 Teilen 0,3 n Natronlauge, sowie eine Dispersion von 1,78 Teilen Sebacinsäuredibutylester in 10 Teilen Wasser zugegeben. Die Wärmebehandlung und Aufarbeitung erfolgte wie in Beispiel 16.

Beispiel 27

Es wurden 1,9 Teile des in Beispiel 1 A2) angegebenen Farbstoffs in Form einer wäßrigen Suspension, 6,68 Teile partiell hydriertes Kolophonium, gelöst in 82 Teilen 0,3 n Natronlauge, sowie eine Dispersion von 1,78 Teilen Sebacinsäuredibutylester in 10 Teilen Wasser zugegeben. Die Wärmebehandlung und Aufarbeitung erfolgte wie in Beispiel 16.

Beispiel 28

Es wurden 1,9 Teile des in Beispiel 8 angegebenen Farbstoffs in Form der wäßrigen Lösung, 6,68 Teile partiell hydriertes Kolophonium, gelöst in 82 Teilen 0,3 n Natronlauge, sowie eine Dispersion von 1,78 Teilen Sebacinsäuredibutylester in 10 Teilen Wasser zugegeben. Die Aufarbeitung erfolgte wie in Beispiel 16.

Die nach Beispiel 22 bis 28 erhaltenen Zubereitungen zeigten in einer Nitrocellulose-Tiefdruckfarbe gegenüber dem ohne Farbstoff-Zusatz hergestellten Pigment, insbesondere im rheologischen Verhalten und im Glanz ähnliche Vorteile, wie sie bei der nach Beispiel 1A) erhaltenen Zubereitung gefunden wurden.

Beispiel 29

1. Diazotierung

14 Teile 2-Amino-5-nitroanisol wurden in 500 Teilen 0,5 n Salzsäure bei 0 °C mit 5,91 Teilen Natriumnitrit diazotiert.

2. Kupplung

18,11 Teile Acetoacet-2-methoxyanilid wurden in 130 Teilen 1,5 n Natronlauge gelöst. Im Kupplungsgefäß wurden 58 Teile 1 n Essigsäure vorgelegt. Dazu wurde so viel der alkalisch gelösten Kupplungskomponente gegeben, daß der pH-Wert 4,5 betrug. Anschließend wurden gleichzeitig die Diazolösung 1 und die restliche Lösung der Kupplungskomponente in das Reaktionsgefäß zugegeben. Dabei wurde der pH-Wert bei 4,5 und die Temperatur bei 10 °C gehalten, gegebenenfalls durch Zugeben von verdünnter Natronlauge. Nach beendeter Kupplung wurden der Pigmentsuspension nacheinander 1,7 Teile des in Beispiel 1 angegebenen Farbstoffs in Form einer wäßrigen Suspension und 5,68 Teile eines teilweise hydrierten Kolophoniumharzes (Staybelite Resin) in 71 Teilen 0,3 n Natronlauge zugefügt. Die Suspension wurde 30 Min. lang gekocht, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A erhaltenen erfindungsgemäßen Zubereitung gefunden wurden.

Beispiel 30

Die Synthese und Nachbehandlung des Pigments 2-Amino-5-nitroanisol → Acetoacet-2-methoxyanilid wurden wie in Beispiel 28 durchgeführt, jedoch wurden anstelle des dort genannten Farbstoffs 1,7 Teile des in Beispiel 2 angegebenen Farbstoffs in Form der wäßrigen Suspension zugesetzt.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A) erhaltenen Zubereitung gefunden wurden.

Beispiel 31

Die Synthese und Nachbehandlung des Pigments 2-Amino-5-nitroanisol → Acetoacet-2-methoxyanilid wurden wie in Beispiel 29 durchgeführt, jedoch wurden anstelle des dort genannten Farbstoffs 1,7 Teile des in Beispiel 3 angegebenen Farbstoffs in Form der wäßrigen Lösung zugesetzt.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A) erhaltenen Zubereitung gefunden wurden.

Beispiel 32

Die Synthese des Pigments 2-Amino-5-nitroanisol → Acetoacet-2-methoxyanilid wurde wie in Beispiel 29 durchgeführt. Nach beendeter Kupplung wurden der Pigmentsuspension nacheinander 1,7 Teile des in Beispiel 1 angegebenen Farbstoffs in Form einer wäßrigen Suspension, 5,96 Teile eines teilweise hydrierten Kolophoniumharzes (Staybelite Resin) in 75 Teilen 0,3 n Natronlauge und eine Dispersion von 59 Teilen Sebacinsäuredibutylester in 10 Teilen Wasser zugefügt. Anschließend wurde 30 Min. lang gekocht, die Zubereitung abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A) erhaltenen Zubereitung gefunden wurden.

Beispiel 33

Die Synthese und Nachbehandlung des Pigments 2-Amino-5-nitroanisol → Acetoacet-2-methoxyanilid wurden wie in Beispiel 32 durchgeführt, jedoch wurden anstelle des dort genannten Farbstoffs 1,7 Teile des in Beispiel 2 angegebenen Farbstoffs in Form der wäßrigen Suspension zugesetzt.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A) erhaltenen Zubereitung gefunden wurden.

Beispiel 34

Die Synthese und Nachbehandlung des Pigments 2-Amino-5-nitroanisol → Acetoacet-2-methoxyanilid wurden wie in Beispiel 32 durchgeführt, jedoch wurden anstelle des dort genannten Farbstoffs 1,7 Teile des in Beispiel 3 angegebenen Farbstoffs in Form der wäßrigen Lösung zugesetzt.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A) erhaltenen Zubereitung gefunden wurden.

Beispiel 35

1. Diazotierung

15,98 Teile 3-Nitro-4-aminotoluol wurden in 405 Teilen 0,7 n Salzsäure bei 0 °C mit 7,29 Teilen Natriumnitrit diazotiert.

2. Kupplung

Im Kupplungsgefäß wurden 282 Teile 1 n Essigsäure vorgelegt. Dazu wurden unter Rühren eine Lösung von 19,08 Teilen Acetoacetanilid in 68 Volumenteilen 4 n Natronlauge zugefügt. Bei 15 bis 20 °C wurde dann die Diazolösung 1 innerhalb von 2 Stunden zur Kupplungskomponente zugegeben. Nach beendeter Kupplung wurden der Pigmentsuspension nacheinander 1,88 Teile des in Beispiel 1 angegebenen Farbstoffs in Form einer wäßrigen Suspension und 6,31 Teile eines partiell hydrierten Kolophoniumharzes (Staybelite Resin) in 79 Teilen 0,3 n Natronlauge zugegeben. Anschließend wurde 30 Min. lang auf 60 °C erhitzt, dann das Endprodukt abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A erhaltenen erfindungsgemäßen Zubereitung gefunden wurden.

Beispiel 36

Die Diazotierung von 15,98 Teilen 3-Nitro-4-aminotoluol und die Kupplung mit 19,08 Teilen Acetoacetanilid wurden wie in Beispiel 35 durchgeführt. Nach beendeter Kupplung wurde die Pigmentsuspension mit 10 %iger Natronlauge neutralisiert. Anschließend wurden nacheinander 1,88 Teile des in Beispiel 3 angegebenen Farbstoffs in Form einer wäßriger Lösung, 6,62 Teile eines partiell hydrierten Kolophoniumharzes (Staybelite Resin) gelöst in 82 Teilen 0,3 n Natronlauge sowie die Dispersion von 1,77 Teilen Sebacinsäuredibutylester in 10 Teilen Wasser zugefügt. Anschließend wurde die Pigmentsuspension 60 Minuten auf 60 °C erhitzt, anschließend das Harz durch Zugabe von 10 %iger Salzsäure bei pH 5 ausgefällt und weitere 15 Minuten bei 60 °C nachgerührt. Die Zubereitung wurde abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei nach Beispiel 1A) erhaltenen Zubereitung gefunden wurden.

Beispiel 37

1. Diazotierung

11,5 Teile 4-Chlor-2-nitranilin wurden in 405 Teilen 0,5 n Salzsäure bei 0 °C mit 4,73 Teilen Natriumnitrit diazotiert.

2. Kupplung

14,5 Teile Acetoacet-2-methoxyanilid wurden in 104 Teilen 1,5 n Natronlauge gelöst. Im Kupplungsgefäß wurden 46,5 Teile 1 n Essigsäure vorgelegt und dazu so viel der alkalisch gelösten Kupplungskomponente gegeben, daß ein pH-Wert von 4,5 erreicht wurde. Anschließend wurden gleichzeitig die Diazolösung 1 und die restliche Lösung der Kupplungskomponente in das Reaktionsgefäß zulaufen gelassen, wobei der pH-Wert bei 4,5 (gegebenenfalls Zugabe von verdünnter Natronlauge) und die Temperatur bei 20 °C gehalten wurde. Nach beendeter Kupplung wurden der Pigmentsuspension 1,4 Teile des in Beispiel 1 angegebenen Farbstoffs in Form einer wäßrigen Suspension zugefügt, dann die Suspension 30 Min. lang gekocht, die Zubereitung abfiltriert, mit Wasser gewaschen und bei 50 bis 630 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich Glanz, Transparenz und rheologischem Verhalten ähnliche Vorteile wie sie bei der nach Beispiel 1A erhaltenen erfindungsgemäßen Zubereitung gefunden wurden.

Beispiel 38

Die Diazotierung von 11,5 Teilen 4-Chlor-2-nitranilin und Kupplung mit 14,5 Teilen Acetoacet-2-methoxyanilid wurden wie in Beispiel 37 durchgeführt, jedoch wurden 1,4 Teile des in Beispiel 2 angegebenen Farbstoffs in Form einer wäßrigen Suspension zur Pigmentsuspension gegeben. Anschließend wurde die Suspension 30 Min. gekocht, das Produkt abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die Beurteilung gegenüber einem ohne Farbstoff-Zusatz hergestellten Pigment ergab hinsichtlich rheologischem Verhalten ähnliche Vorteile, wie sie bei der nach Beispiel 1A) erhaltenen erfindungsgemäßen Zubereitung gefunden wurden. Gleichzeitig wurden Vorteile im Glanz und in der Transparenz gefunden.

Beispiel 39

Eine wäßrige Pigmentsuspension, die durch Diazotierung von 12,3 Teilen 3-Nitro-4-aminotoluol und Kupplung der Diazoverbindung auf 11,3 Teile β-Naphthol in bekannter Weise erhalten wurde, wurde mit 1,2 Teilen des in Beispiel 8 angegebenen Farbstoffs in Form der wäßrigen Lösung versetzt.

Anschließend wurde 30 Min. auf 60 °C erwärmt, das Produkt abfiltriert, mit Wasser gewaschen und getrocknet.

Die Zubereitung wurde nach Beispiel 1 C1) in einem Nitrocellulose-Tiefdrucklack dispergiert. In Vergleich zu einer Tiefdruckfarbe, die mit einem Vergleichspigment hergestellt wurde (das ohne Farbstoff nachbehandelt wurde) lieferte die mit der erfindungsgemäßen Pigmentzubereitung hergestellte Druckfarbe Drucke mit höherem Glanz und verbesserter Transparenz.

Beispiel 40

Die Tetrazotierung von 14 Teilen 3,3'-Dichlor-4,4'-diaminodiphenyl und die Kupplung mit 23,2 Teilen Acetoacet-2,4-dimethylanilid wurde wie in Beispiel 1) angegeben durchgeführt. Nach beendeter Kupplung wurde der pH-Wert der Pigmentsuspension mit 10 %iger Natronlauge auf 9 eingestellt. Anschließend wurden 0,8 Teile des in Beispiel 3 verwendeten Farbstoffs in Form einer wäßrigen Lösung und danach eine Lösung von 17,2 Teilen Balsamharz in 213 Teilen 0,3 n Natronlauge und eine Dispersion von 2,3 Teilen Sebacinsäuredibutylester, in 10 Teilen Wasser zugegeben. Die Pigmentsuspension wurde 15 Min. zum Sieden erhitzt, anschließend das Harz durch Zugabe von 10 %iger Salzsäure bei pH 5 ausgefällt und weitere 15 Min. zum Sieden erhitzt. Die Zubereitung wurde abfiltriert, mit Wasser gewaschen und bei 50 bis 60 °C getrocknet.

Die Zubereitung wurde nach Beispiel 1 C1) in einem Nitrocellulose-Tiefdrucklack dispergiert. Die erhaltene Farbe zeigte im Vergleich zu einer Farbe mit dem Vergleichspigment, das ohne Farbstoff (b) hergestellt wurde, im Glanz, in der Lasur und im Fließverhalten deutliche Vorteile.

Beispiel 41

Die Synthese des Pigments 3,3'-Dichlor-4,4'-diamino-diphenyl → Acetoacet-2,4-dimethylanilid/Acetoacet-2-methoxyanilid wurde wie in Beispiel 17 durchgeführt.

Nach beendeter Kupplung wurde der pH-Wert der Pigmentsuspension mit 10 %iger Natronlauge auf 9 eingestellt. Anschließend wurden 0,8 Teile des in Beispiel 3 verwendeten Farbstoffs in Form einer wäßrigen Lösung und danach eine Lösung von 17,2 Teilen Balsamharz in 210 Teilen 0,3 n Natronlauge und eine Dispersion von 2,3 Teilen Sebacinsäuredibutylester, in 10 Teilen Wasser zugegeben. Die Pigmentsuspension wurde 15 Min. zum Sieden erhitzt, anschließend das Harz durch Zugabe von 10 %iger Salzsäure bei pH 5 ausgefällt und weitere 15 Min. zum Sieden erhitzt. Die Zubereitung wurde abfiltriert, mit Wasser gewaschen und bei 50 bis 60 °C getrocknet.

Die Zubereitung wurde nach Beispiel 1 C1) in einem Nitrocellulose-Tiefdrucklack dispergiert.

Die Zubereitung besaß neben einer etwas höheren Farbstärke und einem grünstichigeren Farbton ähnliche koloristische und rheologische Eigenschaften wie die nach Beispiel 41 erhaltene Zubereitung.

**Patentansprüche**

1. Pigmentzubereitungen, enthaltend

a) mindestens ein Azopigment α) auf der Basis von Kupplungsprodukten aus diazotierten aromatischen Monoaminen mit Acetoacetaryliden, 1-Phenylpyrazolonen, 3-Hydroxy-2-naphthoesäure, deren Arylide und/oder β-Naphthol, β) auf der Basis von Kupplungsprodukten aus tetrazotiertem 4,4'-Diaminodiphenyl, Dichlor-, Dichlor-dibrom- und/oder Tetrachlor-4,4'-diaminodiphenyl mit Acetoacetaryliden und/oder 1-Phenylpyrazolonen oder γ-Gemische dieser Pigmente,

b) mindestens einen Farbstoff der allgemeinen Formel

$$F\text{-}(X)_n,$$

in der

F für einen n-wertigen Rest eines Monoazofarbstoffs, Disazofarbstoffs oder eines Chinophthalons, und F gegebenenfalls eine Sulfonsäuregruppe trägt,

n für 1, 2, 3 oder 4, und

X für eine Gruppe der Formel

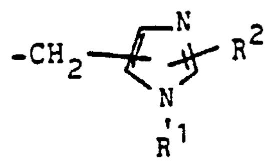

oder

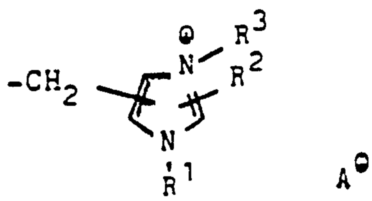

stehen, worin

$R^1$ und $R^2$ unabhängig von einander Wasserstoff oder $C_1$-bis $C_4$-Alkyl, $R^3$ $C_1$- bis $C_4$-Alkyl oder Hydroxy-$C_2$- bis $C_4$-Alkyl und

$A^{\ominus}$ ein Äquivalent eines Anions bedeuten und wobei bei $n > 1$ die Reste X gleich oder verschieden sein können

und gegebenenfalls

c) in Pigmentzubereitungen übliche weitere Bestandteile.

2. Pigmentzubereitung gemäß Anspruch 1, dadurch gekennzeichnet, daß diese als a) mindestens ein Disazopigment auf der Basis von diazotiertem 3,3'-Dichlor-4,4'-diaminodiphenyl mit Acetoacetaryliden, 1-Phenylpyrazolon-5-Verbindungen oder Gemischen davon enthält.

3. Pigmentzubereitungen gemäß Anspruch 1 oder 2, dadurch gekennzeichnet, daß diese als b) mindestens einen Farbstoff der Formel

$$F\text{-}(X)_{n'},$$

enthalten, in der

F für einen n'-wertigen Rest des Benzochinophthalons, der gegebenenfalls eine Sulfonsäuregruppe trägt, eines Kupplungsproduktes von 4,4'-Diaminodiphenylen mit Acetoacetaniliden, Phenylpyrazolonen, Naphtholen oder 3-Hydroxy-2-naphthoesäurearyliden oder für den Rest eines Farbstoffes der Formeln

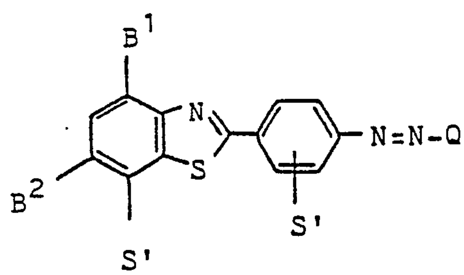

(III)

und

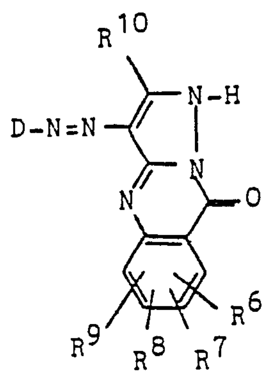

(IV)

und n' für 1 oder 2 stehen, worin Q ein Rest der Formeln

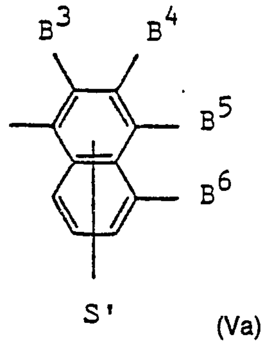

(Va)

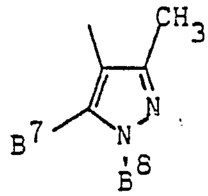

,

(IVb)

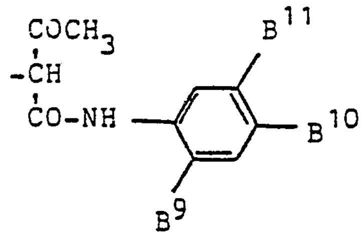

,

(Vc)

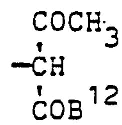

,

(Vd)

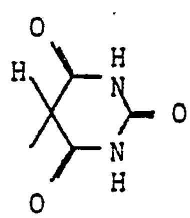

(Ve)

oder

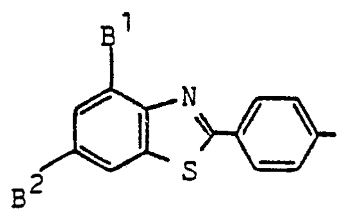

(Vf)

und D ein gegebenenfalls durch ein Phenylazo oder Tolylazo und gegebenenfalls durch ein oder zwei Chlor, Nitro, Methoxy und/oder Methyl substituiertes Phenyl oder ein Rest des 2-(4'-Phenylen)-benzthiazols, der gegebenenfalls in 4-Stellung durch Methyl und/oder in 6-Stellung durch Methyl oder Ethyl substituiert ist, sind und

$B^1$ Wasserstoff oder Methyl,

$B^2$ Wasserstoff, Methyl oder Ethyl,

S' eine Sulfonsäuregruppe oder Wasserstoff,

$B^3$ Wasserstoff, Hydroxy, Amino, 2-Hydroxyethylamino, Methylamino oder Phenylamino,

$B^4$ Wasserstoff, Acetyl oder N-Phenylcarbamoyl,

$B^5$ Wasserstoff, Hydroxy, Methyl, Methoxy, Chlor, Brom, 2-Hydroxyethylamino oder Dimethylamino, wobei $B^3$ oder $B^5$ Hydroxy oder gegebenenfalls substituiertes Amino ist,

$B^6$ Wasserstoff, Methyl oder Methoxy,

$B^7$ Hydroxy oder Amino,

$B^8$ Phenyl oder 4-Methoxyphenyl,

$B^9$ Wasserstoff, Methyl oder Methoxy,

$B^{10}$ Wasserstoff, Methyl oder Methoxy,

$B^{11}$ Wasserstoff oder Methoxy und

$B^{12}$ Methoxy, Butoxy, Amino, Methylamino, Phenoxy, 4-Methylphenoxy oder 3-Methyl-4-methoxyphenoxy,

$R^6$ Wasserstoff, Chlor, Brom, Nitro, Methyl, Trifluormethyl, Carboalkoxy, gegebenenfalls substituiertes Carbamoyl oder Sulfamoyl, Sulfonsäurearylester, Cyan, Alkanoylamino oder Phenyl,

$R^7$ Wasserstoff, Chlor oder Brom,

$R^8$ und $R^9$ unabhängig voneinander Wasserstoff, Chlor, Brom oder zusammen einen annellierten Ring und

$R^{10}$ Methyl oder gegebenenfalls durch Chlor oder Methoxy substituiertes Phenyl bedeuten, und

X die in Anspruch 1 angegebene Bedeutung hat.

4. Pigmentzubereitungen gemäß Anspruch 3, dadurch gekennzeichnet, daß diese als b) mindestens einen Farbstoff der Formel

$$F\text{-}(X)_{n'}$$

enthalten, in der

F für einen n'-wertigen Rest steht, der sich vom 5,6-Benzochinophthalon, von einem Farbstoff, der 3,3'-Dichlor-4,4'-diaminodiphenyl, Dichlor-dibrom-4,4'-diaminodiphenyl und/oder Tetrachlor-4,4'-diaminodiphenyl als Tetrazokomponente und Acetoacetanilide und/oder Phenylpyrazolone als Kupplungskomponente enthält oder von Farbstoffen der Formeln

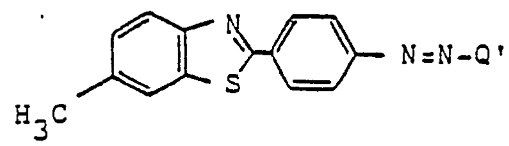

(IIIa)

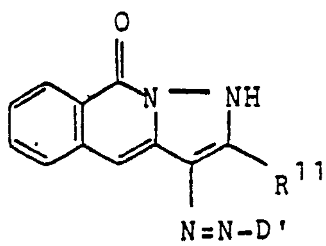

(IVa)

ableitet, worin Q' für einen Rest der Barbitursäure, des N-Methyl-N-benzylanilins oder des 4-(6'-Methylbenzthiazolyl-2')-phenyls, $R^{11}$ für Methyl oder Phenyl und D' für den Rest eines durch Phenylazo oder Tolylazo substituierten Phenylrests, der gegebenenfalls durch Chlor, Methoxy oder Methyl substituiert ist oder des 4-(6'-Methylbenzthiazolyl-2')-phenyls und n' für 1 oder 2 stehen.

5. Pigmentzubereitungen gemäß Anspruch 4, dadurch gekennzeichnet, daß b) ein Farbstoff der Formel

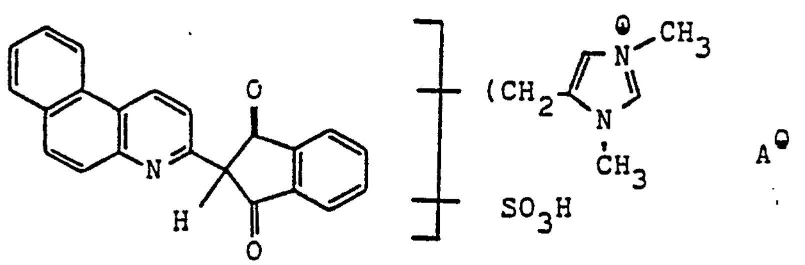

ist, worin $A^{\ominus}$ ein Äquivalent eines Anions ist.

6. Pigmentzubereitungen gemäß Anspruch 1 bis 5, dadurch gekennzeichnet, daß diese — bezogen auf (a) — 0,2 bis 10 Gew.% (b) enthalten.

7. Pigmentzubereitungen gemäß Anspruch 1 bis 5, dadurch gekennzeichnet, daß diese — bezogen auf (a) — a bis 5 Gew.% (b) enthalten.

8. Verwendung der Pigmentzubereitungen gemäß den Ansprüchen 1 bis 7 zum Pigmentieren von Druckfarben.

**Claims**

1. A pigment formulation containing

a) one or more azo pigments α) based on coupling products of diazotized aromatic monoamines with acetoacetarylides, 1-phenylpyrazolones, 3-hydroxy-2-naphthoic acid, arylides thereof and/or β-naphthol, or β) based on coupling products of tetrazotized 4,4'-diaminobiphenyl, dichloro-, dichlorodibromo- and/or tetrachloro-4,4'-diaminobiphenyl with acetoacetarylides and/or 1-phenylpyrazolones, or γ) mixtures of these pigments

b) one or more dyes of the general formula

$$F\text{-}(X)_n$$

where

F is an n-valent radical of a monoazo dye, a disazo dye or a quinophthalone, and may or may not carry a sulfo group,

n is 1, 2, 3 or 4 and

X is a group of the formula

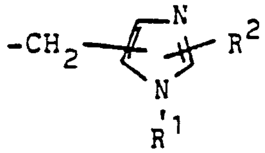

or

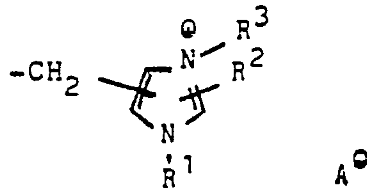

where

$R^1$ and $R^2$ independently of one another are each hydrogen or $C_1$-$C_4$-alkyl, $R^3$ is $C_1$-$C_4$-alkyl or hydroxy-$C_2$-$C_4$-alkyl and

$A^{\ominus}$ is one equivalent of an anion, and, where n is > 1, the radicals X may be identical or different with or without

c) other components conventionally employed in pigment formulations.

2. A pigment formulation as claimed in claim 1, which contains, as a), one or more disazo pigments based on diazotized 3,3'-dichloro-4,4'-diaminobiphenyl and an acetoacetarylide, a 1-phenylpyrazol-5-one compound or a mixture of these.

3. A pigment formulation as claimed in either of claim 1 or 2, which contains, as b), one or more dyes of the formulae

$$F\text{-}(X)_{n'}$$

where

F is an n'-valent radical of benzoquinophthalone, which may or may not carry a sulfo group, or of a coupling product of a 4,4'-diaminobiphenyl with an acetoacetanilide, acetanilide, a phenylpyrazolone, a naphthol or a 3-hydroxy-2-naphthoic acid arylide, or is a radical of a dye of the formulae

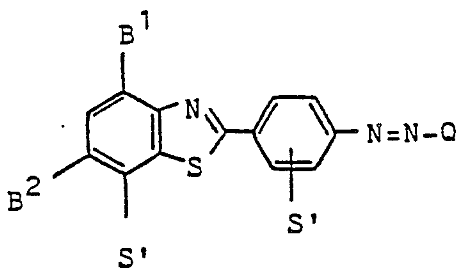

(III)

,

and

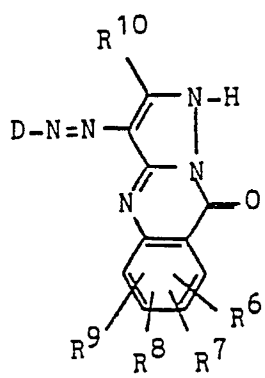

(IV)

n' is 1 or 2, Q is a radical of the formula

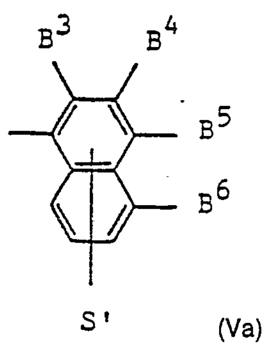

(Va)

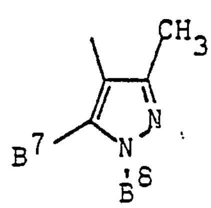

,

(Vb)

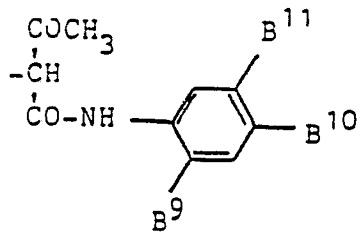 (Vc) , 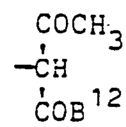 (Vd) ,

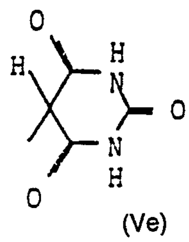 (Ve) or 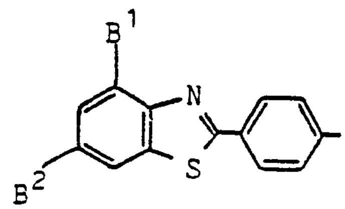 (Vf)

D is phenyl which is unsubstituted or substituted by one phenylazo or tolylazo and by one or two chlorine atoms, nitro groups, methoxy groups and/or methyl groups, or is a radical of 2-(4'-phenylene)-benzothiazole, which is unsubstituted or substituted in the 4-position by methyl and/or in the 6-position by methyl or ethyl,

$B^1$ is hydrogen or methyl,

$B^2$ is hydrogen, methyl or ethyl,

S' is sulfo or hydrogen,

$B^3$ is hydrogen, hydroxyl, amino, 2-hydroxyethylamino, methylamino or phenylamino,

$B^4$ is hydrogen, acetyl or N-phenylcarbamoyl,

$B^5$ is hydrogen, hydroxyl, methyl, methoxy, chlorine, bromine, 2-hydroxyethylamino or dimethylamino, $B^3$ or $B^5$ being hydroxyl or unsubstituted or substituted amino,

$B^6$ is hydrogen, methyl or methoxy,

$B^7$ is hydroxyl or amino,

$B^8$ is phenyl or 4-methoxyphenyl,

$B^9$ and $B^{10}$ are each hydrogen, methyl or methoxy,

$B^{11}$ is hydrogen or methoxy,

$B^{12}$ is methoxy, butoxy, amino, methylamino, phenoxy, 4-methylphenoxy or 3-methyl-4-methoxyphenoxy,

$R^6$ is hydrogen, chlorine, bromine, nitro, methyl, trifluoromethyl, carboalkoxy, unsubstituted or substituted carbamoyl sulfamoyl, a sulfonic acid aryl ester group, cyano, alkanoylamino or phenyl,

$R^7$ is hydrogen, chlorine or bromine,

$R^8$ and $R^9$ independently of one another are each hydrogen, chlorine or bromine, or together form a fused ring,

$R^{10}$ is methyl or unsubstituted or chlorine-substituted or methoxy-substituted phenyl and

X has the meanings stated in claim 1.

4. A pigment formulation as claimed in claim 3, which contains, as b), one or more dyes of the formula

$$F\text{-}(X)_{n'}$$

where

F is an n'-valent radical which is derived from 5,6-benzoquinophthalone, from a dye which contains 3,3'-dichloro-4,4'-diaminobiphenyl, dichlorodibromo-4,4'-diaminobiphenyl and/or tetrachloro-4,4'-diaminobiphenyl as a tetrazo component and an acetoacetanilide and/or phenylpyrazolone as the coupling component, or from dyes of the formulae

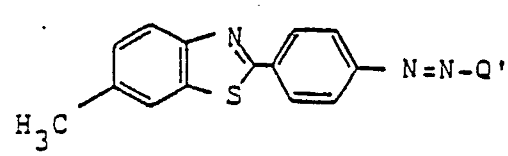 (IIIa)

and

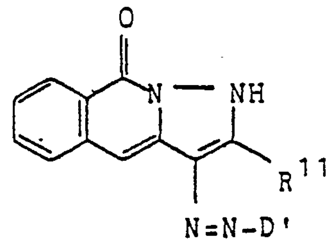

(IVa)

where Q' is a radical of barbituric acid, of N-methyl-N-benzylaniline or of 4-(6'-methylbenzothiazol-2'-yl)-phenyl, $R^{11}$ is methyl or phenyl and D' is a radical of phenyl which is substituted by phenylazo or tolylazo and may be further substituted by chlorine, methoxy or methyl, or of 4-(6'-methylbenzothiazol-2'-yl)-phenyl, and n' is 1 or 2.

5. A pigment formulation as claimed in claim 4, wherein b) is a dye of the formula

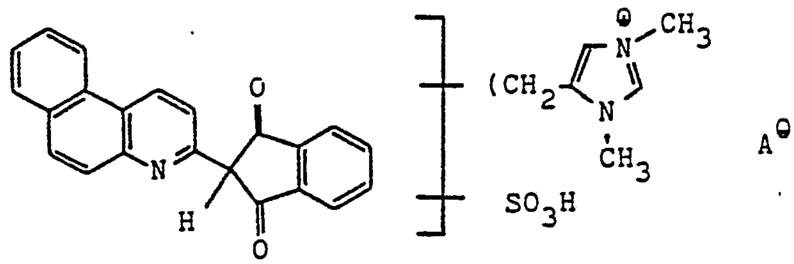

where $A^{\ominus}$ is one equivalent of an anion.

6. A pigment formulation as claimed in any of claims 1 to 5, which contains from 0.2 to 10 % by weight, based on (a), of (b).

7. A pigment formulation as claimed in any of claims 1 to 5, which contains from 1 to 5 % by weight, based on (a), of (b).

8. Use of a pigment formulation as claimed in any of claims 1 to 7 for pigmenting printing inks.

**Revendications**

1. Préparations pigmentaires, contenant

a) au moins un pigment azoïque, α) à base de produits de copulation de monoamines aromatiques diazotées avec des acéto-acétarylides, des 1-phénylpyrazolones, l'acide 3-hydroxy-2-naphtoïque, l'arylide de celui-ci et/ou le β-naphtol, β) à base de produits de copulation de 4,4'-diaminodiphényle, de dichloro-, dichlorodibromo- et/ou tétrachloro-4,4'-diaminodiphényle tétra-azoté avec des acéto-acétarylides et/ou des 1-phénylpirazolones, ou γ) des mélanges de ces pigments,

b) au moins un colorant de formule générale

$$F\text{-}(X)_n$$

dans laquelle

F est mis pour un reste n-valent d'un colorant mono-azoïque, d'un colorant disazoïque ou d'une quinophtalone, et F porte éventuellement un groupe acide sulfonique,

n est mis pour 1, 2, 3 ou 4, et

X est mis pour un groupement de formule

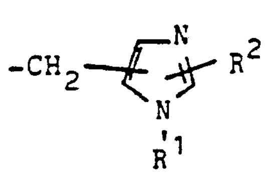

ou

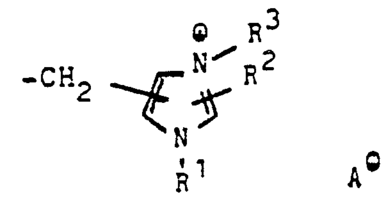

$R^1$ et $R^2$ représentant chacun, indépendamment l'un de l'autre, un atome d'hydrogène ou un radical alkyle en $C_1$ à $C_4$, $R^3$ représentant un radical alkyle en $C_1$ à $C_4$ ou hydroxy-$C_2$-$C_4$-alkyle et

$A^{\ominus}$ représentant un équivalent d'un anion, et lorsque n > 1, les radicaux X pouvant être identiques ou différents,

et éventuellement

c) d'autres constituants usuels dans des préparations pigmentaires.

2. Préparations pigmentaires selon la revendication 1, caractérisées en ce qu'elles contiennent, en tant que a), au moins un pigment disazoïque à base de 3,3'-dichloro-4,4'-diaminodiphényle diazoté, copulé avec des acéto-acétarylides, des dérivés de 1-phénylpyrazolone-5 ou des mélanges de ceux-ci.

3. Préparations pigmentaires selon la revendication 1 ou 2, caractérisées en ce qu'elles contiennent, en tant que b), au moins un colorant de formule

$$F\text{-}(X)_{n'}$$

dans laquelle

F est mis pour un reste n'-valent de la benzoquinophtalone, qui porte éventuellement un groupement acide sulfonique, d'un produit de copulation de 4,4'-diaminophénylène avec des acéto-acétanilides, des phénylpyrazolones, des naphtols ou des arylides d'acide 3-hydroxy-2-naphtoïque, ou pour un reste d'un colorant de formules

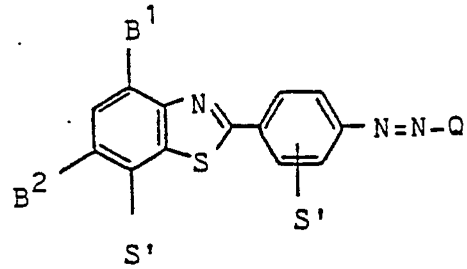

(III)

et

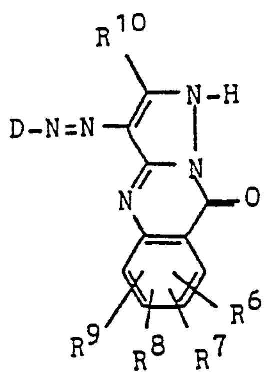

(IV)

et n' est mis pour 1 ou 2, Q étant un reste de formule

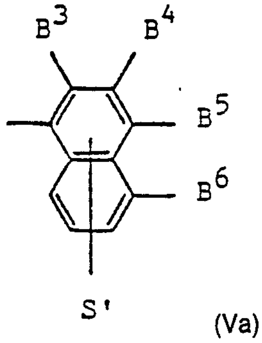

(Va)

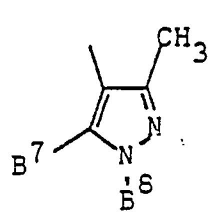

,

(Vb)

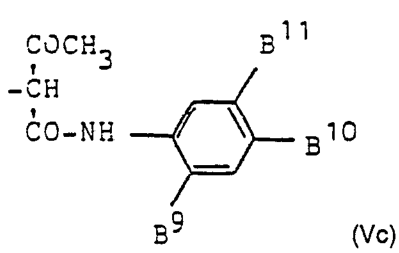

,

(Vc)

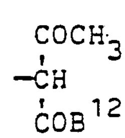

,

(Vd)

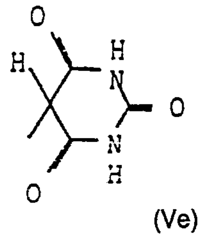

(Ve)

ou

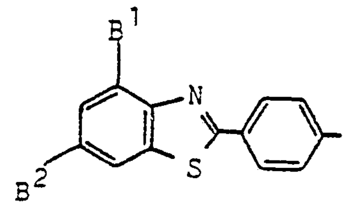

(Vf)

et D étant un radical phényle substitué éventuellement par un groupement phénylazo ou tolylazo et éventuellement par un ou deux atomes de chlore, groupements nitro, méthoxy et/ou méthyle, ou un reste du 2-(4′-phénylène)-benzothiazole qui est éventuellement substitué en position 4 par un radical méthyle et/ou en position 6 par un radical méthyle ou éthyle, et

B′ représentant un atome d'hydrogène ou un radical méthyle,

$B^2$ un atome d'hydrogène, un radical méthyle ou éthyle,

S′ un groupement acide sulfonique ou un atome d'hydrogène

$B^3$ un atome d'hydrogène, un groupement hydroxy, amino, 2-hydroxyéthylamino, méthylamino ou phénylamino,

$B^4$ un atome d'hydrogène, un groupement acétyle ou N-phénylcarbamoyle,

$B^5$ un atome d'hydrogène, un groupement hydroxy, méthyle, méthoxy, un atome de chlore ou de brome, un groupement 2-hydroxyéthylamino ou diméthylamino, $B^3$ ou $B^5$ étant un groupement hydroxy ou amino éventuellement substitué,

$B^6$ un atome d'hydrogène, un radical méthyle ou méthoxy,

$B^7$ un groupement hydroxy ou amino,

$B^8$ un groupement phényle ou 4-méthoxyphényle,

$B^9$ un atome d'hydrogène, un radical méthyle ou méthoxy,

$B^{10}$ un atome d'hydrogène, un radical méthyle ou méthoxy,

$B^{11}$ un atome d'hydrogène ou un radical méthyle et

$B^{12}$ un groupement méthoxy, butoxy, amino, méthylamino, phénoxy, 4-méthylphénoxy ou 3-méthyl-4-méthoxyphénoxy,

$R^6$ représentant un atome d'hydrogène, de chlore, de brome, un groupement nitro, méthyle, trifluorométhyle, carboalcoxy, carbamoyle ou sulfamoyle éventuellement substitué, ester arylique d'acide sulfonique, cyano, alcanoylamino ou phényle,

$R^7$ un atome d'hydrogène, de chlore ou de brome,

$R^8$ et $R^9$ représentant, indépendamment l'un de l'autre, un atome d'hydrogène, de chlore, de brome ou formant ensemble un noyau condensé et

$R^{10}$ un radical méthyle ou phényle éventuellement substitué par un atome de chlore ou un groupe méthoxy, et

X a la signification donnée dans la revendication 1.

4. Préparations pigmentaires selon la revendication 3, caractérisées en ce qu'elles contiennent, en tant que b), au moins un colorant de formule

$$F\text{-}(X)_{n'}$$

dans laquelle

F est mis pour un reste n′-valent qui dérive de la 5,6-benzoquinophtalone, d'un colorant qui contient du 3,3′-dichloro-4,4′-diaminodiphényle, du dichloro-dibromo-4,4′-diaminodiphényle et/ou du tétrachloro-4,4′-diaminodiphényle en tant que composant de tétra-azoïque et de l'acéto-acétanilide et/ou de la phénylpyrazolone en tant que composant de copulation, ou de colorants de formules

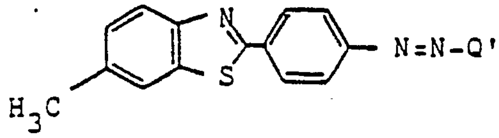

(IIIa)

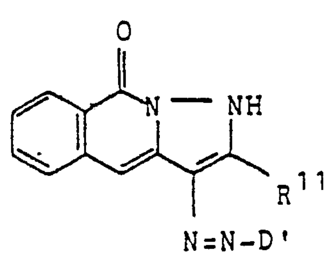

(IVa)

dans lesquelles Q' est mis pour un reste de l'acide barbiturique, de la N-méthyl-N-benzylaniline ou du 4-(6'-méthylbenzothiazolyl-2')-phényle, $R^{11}$ pour un reste méthyle ou phényle et D' pour le reste d'un radical phényle substitué par un groupement phénylazo ou tolylazo, qui est éventuellement substitué par un atome de chlore, un radical méthoxy ou méthyle, ou du 4-(6'-méthylbenzothiazolyl-2')-phényle, et n' est mis pour 1 ou 2.

5. Préparations pigmentaires selon la revendication 4, caractérisées en ce que b) est un colorant de formule

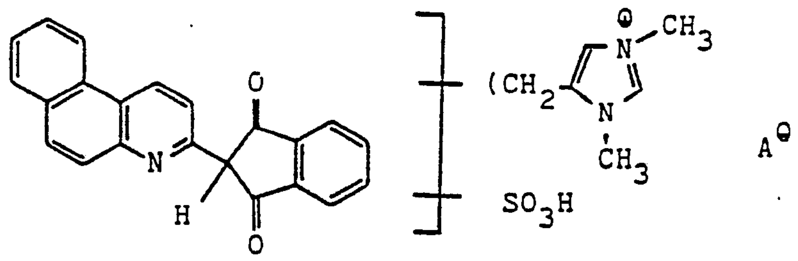

dans laquelle $A^{\ominus}$ est un équivalent d'un anion.

6. Préparations pigmentaires selon l'une quelconque des revendications 1 à 5, caractérisées en ce qu'elles contiennent — par rapport à (a) — 0,2 à 10 % en poids de (b).

7. Préparations pigmentaires selon l'une quelconque des revendications 1 à 5, caractérisées en ce qu'elles contiennent — par rapport à (a) — 1 à 5 % en poids de (b).

8. Utilisation des préparations pigmentaires selon l'une quelconque des revendications 1 à 7 pour la pigmentation d'encres d'imprimerie.